Europäisches Patentamt

European Patent Office

Office européen des brevets

(11) Publication number: **0 400 719**
**A2**

## EUROPEAN PATENT APPLICATION

(21) Application number: **90201298.8**

(51) Int. Cl.⁵: **C08J 5/04, B32B 27/04**

(22) Date of filing: **22.05.90**

(30) Priority: **24.05.89 GB 8911933**

(43) Date of publication of application:
**05.12.90 Bulletin 90/49**

(84) Designated Contracting States:
**BE DE ES FR GB IT NL SE**

(71) Applicant: **SHELL INTERNATIONALE
RESEARCH MAATSCHAPPIJ B.V.
Carel van Bylandtlaan 30
NL-2596 HR Den Haag(NL)**

(72) Inventor: **Jordaan, Johannes Clemens Maria
Badhuisweg 3
NL1031 CM Amsterdam(NL)**

(74) Representative: **Aalbers, Onno et al
P.O. Box 302
NL-2501 CH The Hague(NL)**

(54) **Panels based upon a synthetic resin.**

(57) Panel based upon a synthetic resin, which panel is destined to be attached to a supporting structure, wherein the panel is based upon a thermoplastic polymer and contains a continuous fibre-based reinforcement having a coefficient of linear thermal expansion (C.L.T.E.) which is in the range of from 0.33 to 3 times the C.L.T.E. of the supporting structure, and a structural element comprising such a panel and a supporting structure.

EP 0 400 719 A2

## PANELS BASED UPON A SYNTHETIC RESIN

The present invention relates to a panel based upon a synthetic resin which panel is destined to be attached to a supporting structure, thus forming a structural element.

Synthetic resins, and during the last decade or so especially thermoplastic polymers, have been finding their way into the industry as a replacement for metal, offering important advantages, such as weight reduction and corrosion resistance. One area wherein the advent of said thermoplastic polymers plays an important part is the automotive and related industry. Initially, in said area, the use of thermoplastic polymer-based parts was restricted to the interior of the vehicle, as those parts are generally mounted during one of the last production stages and are thus not exposed to excessively high temperatures as occur e.g. when the car body passes through a paint oven. Moreover, during the service life of the vehicle, the passenger compartment is generally subjected to only relatively small temperature variations. Hence in this type of application the large difference in coefficient of linear thermal expansion (C.L.T.E.) of the thermoplastic polymer and that of the metal of the supporting structure, was not considered to be a major disadvantage or restriction.

The use of thermoplastic polymer gives rise to the above mentioned problems, more than thermosetting resins do. On the other hand they offer the advantage over thermosetting resins, for example, in allowing a substantially higher production rate of the parts.

The replacement of metal parts or panels of the exterior of the car body with parts or panels based on thermoplastic polymers proved to be cumbersome, as such parts should not only be able to withstand the high temperature of the paint oven, but should also withstand exposure to relatively large temperature changes during the service life of the vehicle. Hence the thermoplastic polymers should first of all have a melting point well above the highest temperature to which the car body or the vehicle will be exposed. However, in view of the many types of thermoplastic polymer available this was as such not considered to be a major problem. More problematic proved to be the large difference in C.L.T.E. of the thermoplastic polymer and that of the material of the supporting structure, in combination with the wide range of temperatures to which vehicles can be exposed. Said difference in C.L.T.E. will result in a considerable difference in the degree of expansion between the thermoplastic polymer-based parts and the supporting structure, especially when such parts are relatively large, such as would be the case with mudguards, doors, bonnets, hoods and underbody panels. When such panels have been attached to metal structures and are subsequently exposed to high temperatures, e.g. as may occur in a paint oven, said difference in expansion will almost certainly result in distortion and/or cracking of the panels. Finding a solution for this problem was considered to be of vital importance for the successful use of thermoplastic polymer-based panels in the automotive industry and in other branches of the industry where this phenomenon may occur.

One solution towards solving this problem has been described in US-A-4,529,244, and concerns the use of a combination of fixed and slidable fasteners for mounting the thermoplastic polymer-based panels onto the supporting structure, thus enabling the thermoplastic polymer-based panel to expand or contract more or less independently from the structure, while remaining attached thereto. However, in order to be successful said method requires space which enables an unhampered expansion of the panels to occur and hence there should be sufficient clearance between adjoining panels. As the size of such a clearance may be relatively large, it will not only degrade the appearance of the vehicle but will moreover also require special precautions to prevent penetration of, e.g., moisture, dirt and noise, into the interior parts of the vehicle.

A panel based upon a synthetic resin which panel is destined to be attached to a supporting structure is known from US-A-4,707,020. These panels have also been attached with slidable fasteners, and because here the expansion of adjoining panels is occurring in different parallel planes, less clearance between the adjoining panels is required. The slidable attachments applied are rather vulnerable and may in due course gradually lose their ability to slide or may otherwise result in a less secure connection between the polymer panel and the supporting structure.

Hence it will be appreciated that there is a need for improvement of the solutions found so far for the problems related to the use of thermoplastic polymer-based exterior body panels in automotive and related industries. The aim of the present invention is to furnish such an improvement.

·It has now surprisingly been found that it is possible to develop thermoplastic polymer-based panels which do not require the presence of slidable fasteners and relatively large clearances by including a continuous fibrous reinforcement into the panel, which reinforcement has a C.L.T.E. of the same order of magnitude as that of the supporting structure. The use of such a panel is not restricted to the automotive industry but may suitably be used in any application wherein thermoplastic panels or related articles are

2

connected to structures having a C.L.T.E. which is considerably different to that of the polymer-based parts, and which structures are to be used under greatly varying temperature conditions.

The invention provides therefore a panel based upon a synthetic resin, which panel is destined to be attached to a supporting structure, characterized in that the panel is based upon a thermoplastic polymer and contains a continuous fibre-based reinforcement having a coefficient of linear thermal expansion (C.L.T.E.) which is in the range of from 0.33 to 3 times the C.L.T.E. of the supporting structure.

Furthermore, the invention is related to a structural element, comprising a panel of the invention and the supporting structure to which the panel is attached. In addition, the invention is related to such a structural element which has been subjected to a painting process which includes a heating step.

The supporting structure may be a metal structure or a non-metal structure of which the performance properties resemble those of a metal structure. Suitable non-metal structures include structures based on reinforced thermosetting synthetic resins.

The term "continuous fibre", in the context of the present invention, refers to fibres which are generally considerably longer than long-fibres or staple-fibres. Conveniently the length of the continuous fibres will be of the same order of magnitude as the length and/or width of the panels.

It is considered to be advantageous to have the reinforcement evenly distributed throughout the polymer matrix. Although the fibres comprising the reinforcement may be randomly orientated, it is preferred if the reinforcement comprises one or more layers each comprising substantially unidirectionally orientated continuous fibres. When two or more layers are involved, it is advantageous if the fibre directions in adjacent layers are substantially different from one another, e.g. at right angles in the case of two layers. It is especially preferred for the reinforcements to be present as woven fibrous reinforcements, such as woven fabrics.

The number of layers of unidirectionally orientated fibres or of woven fibrous reinforcement present in said reinforced thermoplastic polymer-based panels will be largely determined by the performance requirements of the panel and the nature of fibrous layers. Suitably, the reinforcement will comprise from 5 to 70% by weight, relative to the weight of the panel.

The fibres which may be used as reinforcement for the thermoplastic polymer-based panels of the present invention may be based on any material which meets the C.L.T.E. requirements, as defined hereinbefore. In addition to different types of metal, suitable fibre materials include silica-based compounds such as glass and ceramic materials, as well as carbon. Glass fibres are preferred fibres in the present invention.

The present invention should not be considered to be restricted to reinforced thermoplastic polymer based panels wherein the panels are reinforced with a single type of fibre or fibrous material, but should be understood to also include fibrous reinforcements based on more than one type of fibre and/or fibrous material.

The panels of the present invention, may be based on any thermoplastic polymer which does not melt or soften at the highest temperature to which the panel or structural element of the present invention may have to be exposed, and for the duration of said exposure. Preferably the polymers have a crystalline melting point of at least 20 °C above the highest temperature to which the panel is to be subjected. Generally the highest temperature will be experienced in a paint oven. The temperature in the paint oven will primarily be determined by the nature of the paint coating or coatings applied. With some paint systems it is sufficient to have a temperature in the paint oven of 130 °C. Hence with such a paint oven temperature the panels can be based on thermoplastic polymers having a crystalline melting point of 150 °C or above. Thermoplastic polymers on which said panels may be based include polypropylene, acrylonitrile-butadiene-styrene polymers, thermoplastic polyesters such as polyethyleneterephthalate and polybutyleneterephthalate, polyacetals, polyamides, polycarbonates and linear alternating copolymers of carbon monoxide and at least one olefinically unsaturated compound, as well as suitable blends thereof; other suitable polymeric blends include blends of polyphenyloxide with nylon or polystyrene.

As the thermoplastic polymer-based panels have usually to be coated with one or more layers of a paint, it is considered to be an advantage when said polymers have a certain degree of polarity, as this may be expected to promote the adhesion between the paint coating and the polymeric substrate.

It is preferred to have the panels of the present invention based on the hereinbefore mentioned linear alternating copolymer of carbon monoxide and an olefinically unsaturated compound. The term "alternating" copolymers refers to those copolymers in which the CO-units in the macromolecules are in alternating arrangement in respect of the units derived from the olefin. Thus, in the macromolecular chains, each CO-unit is positioned next to a single unit derived from the olefin, e.g. ethylene. The copolymer can be a true copolymer of carbon monoxide and one particular olefin, e.g. ethylene, or it can be a copolymer of carbon monoxide and more than one olefin, e.g. ethylene and propylene. In the latter case ethylene is preferably employed as the major olefin. The relevant alternating copolymers are known per se, for example from EP-A-121,965, EP-A-213,671, EP-A-229,408 and US-A-3,914,391. Likewise, their methods of preparation by catalytic copolymerization are known from these references. Suitable polymerization catalysts are based upon palladium/phosphine systems.

More preferred thermoplastic polymers are copolymers of ethylene and carbon monoxide, and terpolymers of ethylene, propylene and carbon monoxide, and most preferred are such terpolymers wherein the ethylene to propylene molar ratio in the polymer chains is at least 3:1.

Although the reinforced panels of the present invention may be manufactured by any process suitable for the preparation of thin-walled thermoplastic polymer-based panels, a preferred method for the preparation of said reinforced panels comprises an extrusion-calandering-embedding-pressure thermoforming production sequence. With this sequence a woven fabric, e.g. a glass fibre woven fabric, is extrusion coated on two sides with a suitable thermoplastic polymer, passed through a calander to control the gauge and polish the surface and subsequently cooled and cut to the appropriate blanks. The extrusion coating conditions chosen are such, that by penetration of the polymer melt through the fabric mesh a polymer matrix is obtained having the continuous fibre embedded therein. In order to enhance interfilament polymer penetration, it is considered beneficial to preheat the woven fabric before contacting it with the polymer. The hereinbefore mentioned blanks are ultimately reheated and then pressure thermoformed to obtain the desired shaped panel. When desired, the overall rigidity of the panel can be regulated by varying the number of layers of woven fabric and/or providing the panel with e.g. a honeycomb rib design on the inside of the panel during thermoforming.

The polymer matrix of the panels of the present invention may include compounds such as pigments, fillers, processing aids, impact modifiers and stabilizers, such as antioxidants and U.V. stabilizers.

The panels of the invention may be attached to the supporting structure by any conventional fastener, advantageously by non-slidable fasteners such as rivets, screws, or nuts and bolts.

The invention will be further illustrated by the following examples.

EXAMPLES 1-3

Reinforced test sheets were prepared by compression moulding, using a carbon monoxide-ethylene-propylene terpolymer in the form of nibs, having a melting point of 219 °C and a Limiting Viscosity Number of 1.14 dl/g (as determined in meta-cresol at 60 °C). The following glass-fibre reinforcement was used: 138 Mock Leno (plain weave), finish P-703, specific weight 310 g/m$^2$, density 2.54 g/cm$^3$, coefficient of linear thermal expansion about $0.5 \times 10^{-5}$ °C$^{-1}$.

In the compression moulding technique a 120x170 mm mould was used having a temperature of 250 °C. The mould was charged consecutively with 30 g of the polymer nibs, a sufficient number of layers of the glass-fibre reinforcement to arrive at the desired glass content and again with 30 g of polymer nibs. After having been charged with polymer and reinforcement, the mould was closed and the contents were preheated for 2.5 min under a load of 0.3 tons. Subsequently the load was increased to 2.0 tons and heating continued during 2.0 min., this was followed by cooling to approximately 20 °C under a gradually decreasing pressure. The thickness of the resulting sheets varied with the amount of reinforcement used and was generally in the range of from 1.8-2.3 mm.

The test sheets thus prepared were tested for thermal expansion, density, tensile strength, elongation at break and flexural modulus. The coefficient of linear thermal expansion (C.L.T.E.) was determined with the aid of a differential scanning calorimeter, using a heating/cooling rate of 2 °C/min and scanning over a temperature range of from -40 °C to 100 °C, employing a 10 x 6 mm sample cut from the test sheet.

Tensile strength and elongation at break were determined following ASTM D-638M. Flexural moduli were determined following ASTM D 790. The composition of the various samples and the corresponding test results have been given in Table 1.

In a comparative experiment a non-reinforced test sheet was made by the same procedures and using the same polymer as in the above examples. The corresponding test results are given in Table 1.

Table 1

| Example | Glass content of panel | Density | CLTE | Tensile strength | Elongation at break | Flexural Modulus |
|---|---|---|---|---|---|---|
| | %w | g/cm$^3$ | $°C^{-1}$ | MPa | % | MPa |
| 1 | 27 | 1.65 | $2.5 \times 10^{-5}$ | 96 | 1.6 | 2400 |
| 2 | 40 | 1.77 | $2.4 \times 10^{-5}$ | 145 | 1.6 | 7100 |
| 3 | 50 | 1.90 | $2.2 \times 10^{-5}$ | 180 | 1.6 | 10200 |
| Comparative Experiment | 0 | 1.25 | $1.1 \times 10^{-4}$ | 58 | 23 | 1800 |
| C.L.T.E. steel: approx $1.2 \times 10^{-5}$ | | | | | | |

The above examples show that the large difference in C.L.T.E. of the thermoplastic polymer-based panels and a supporting steel structure can be reduced largely by incorporating into the panel a continuous glassfibre based reinforcement, which reinforcement material has a C.L.T.E. of approximately the same value as steel. The reduced difference in C.L.T.E. will allow a larger range of temperatures during the manufacture and the service life of the structural element and it will allow the application of non-slidable fasteners, without the occurrence of distortion and/or cracking of the panels.

## Claims

1. Panel based upon a synthetic resin, which panel is destined to be attached to a supporting structure, characterized in that the panel is based upon a thermoplastic polymer and contains a continuous fibre-based reinforcement having a coefficient of linear thermal expansion (C.L.T.E.) which is in the range of from 0.33 to 3 times the C.L.T.E. of the supporting structure.

2. A panel as claimed in claim 1, characterized in that the reinforcement comprises one or more layers each comprising substantially unidirectionally orientated continuous fibres.

3. A panel as claimed in claim 2, characterized in that the reinforcement is a woven fibrous reinforcement.

4. A panel as claimed in any of claims 1-3, characterized in that the reinforcement is a glassfibre reinforcement.

5. A panel as claimed in any of claims 1-4, characterized in that the reinforcement comprises from 5 to 70% by weight, relative to the weight of the panel.

6. A panel as claimed in any of claims 1-5, characterized in that the thermoplastic polymer comprises a linear alternating copolymer of carbon monoxide and at least one olefinically unsaturated compound.

7. A panel as claimed in claim 6, characterized in that the linear alternating copolymer is a carbon monoxide-ethylene-propylene terpolymer, wherein the ethylene to propylene molar ratio is at least 3:1.

8. Structural element comprising a panel as claimed in any of claims 1-7, and the supporting structure to which the panel is attached.

9. A structural element as claimed in claim 8, characterized in that the panel is attached to the supporting structure by non-slidable fasteners.

10. A structural element as claimed in claim 8 or 9, characterized in that the structural element has been subjected to a painting process which includes a heating step.